# EUROPEAN PATENT SPECIFICATION

(11) **EP 2 462 705 B1**
(45) Date of publication and mention of the grant of the patent: **09.10.2013**
(21) Application number: 09787825.0
(22) Date of filing: 04.08.2009
(51) Int. Cl.: H04B 7/185

(54) **SYSTEM FOR MONITORING AND CONTROL OF A SATELLITE-TELEVISION BROADCASTING SYSTEM**
ÜBERWACHUNG- UND STEUERUNGSANORDNUNG FÜR EIN SATELLITEN FERNSEHRUNDFUNKSYSTEM
SYSTÈME DE CONTRÔLE ET DE COMMANDE D'UN SYSTÈME DE TÉLÉDIFFUSION PAR SATELLITE

(43) Date of publication of application: 13.06.2012
(73) Proprietor: Telespazio S.p.A., 00156 Roma (IT)
(72) Inventor: TEMPRA, Stefano, I-23018 Talamona (IT)
(74) Representative: Bergadano, Mirko
(86) International application number: PCT/IT2009/000359
(87) International publication number: WO 2011/016060

(56) References cited:
- EP-A- 0 827 290
- EP-A- 0 872 965
- EP-A- 1 241 801
- WO-A-2004/029794
- JP-A- 2001 203 613

## Description

### TECHNICAL SECTOR OF THE INVENTION

The present invention relates to a system for monitoring and controlling a satellite telecommunications system.

In particular, the present invention finds advantageous, though non-exclusive, application in the field of television broadcasting via satellite based upon the standard Digital Video Broadcasting - Satellite (DVB-S) and/or upon the standard Digital Video Broadcasting - Satellite - Second Generation (DVB-S2).

Consequently, for simplicity of description and without this implying any loss of generality, in what follows the description of the present invention will make explicit reference to satellite-television broadcasting systems, it remaining understood that the present invention can advantageously be applied also to other types of satellite telecommunications systems.

### STATE OF THE ART

As is known, in the context of satellite-television broadcasting, in particular ones based upon the DVB-S and/or DVB-S2 standards, a transmission station, located in a given position on the surface of the Earth and supplied with digital-television signals, transmits, by means of a satellite antenna, said signals modulating them on different carriers. In order for the carriers transmitted by the transmission station to be received efficiently by the satellite, an antenna control unit (ACU) is coupled to the satellite antenna for controlling the movement thereof so as to keep it always aligned with the satellite. The satellite, in turn, broadcasts over a wide area of the surface of the Earth the carriers received from the transmission station.

In general, a transmission station comprises a redundant transmission chain, in which the presence of switching devices enables, in the event of malfunctioning of an apparatus, use of a respective backup apparatus.

Current satellite-television broadcasting systems can comprise even two or more transmission stations, each of which is located in a respective geographical position, is designed to transmit respective carriers, and manages independently and autonomously the respective backup resources with which it is equipped.

Unfortunately, however, in the transmission chains of the transmission stations of current satellite-television broadcasting systems some points are present for which it is not possible to have redundancy, such as, for example, the ACU or the mylar membrane that coats the feed of the satellite antenna and that has the purpose of keeping the inside of the feed under pressure so as to prevent entry of water, for example on account of rain, and/or formation of ice inside the feed.

With regard to satellite broadcast systems using a plurality of transmission stations, EP 1 241 801 A discloses a site diversity method, a digital satellite broadcast receiving method and a digital satellite broadcast receiver which can make a difference of data output timing between a main station and a subsidiary station at the time of site exchange as small as possible and can perform re-synchronization as soon as possible. In the site diversity method for digital satellite broadcast according to EP 1 241 801 A, when a site exchange execution designation signal is received, the site is exchanged during a period of a TMCC information field of a predetermined specific frame of a super frame determined when the execution designation signal is received. On the receiver side, information of broadcast is continuously received by detecting a TMCC information field in a specific frame during a period of which field the site was exchanged and by establishing re-synchronization by using a super frame sync pattern W2 or W3 after the detected TMCC information field.

### SUBJECT AND SUMMARY OF THE INVENTION

The Applicant has noted that, in a transmission station of a satellite-television broadcasting system, any failure or malfunctioning of an apparatus of the transmission chain that is not equipped with a respective backup apparatus and/or a simultaneous failure or malfunctioning both of an apparatus of the transmission chain and of the respective backup apparatus and/or a simultaneous failure or malfunctioning both of an apparatus of the transmission chain and of the switching device designed to enable operation of the respective backup apparatus can cause an interruption of broadcasting and, hence, an interruption of the service (or of part of the service in the case of two or more transmission stations) provided by the satellite-television broadcasting system.

The Applicant has likewise noted that in particular weather conditions, for example, in the case of heavy rainfall/hailstorms/snowfall that cause high attenuation of the transmission powers, it may be impossible to maintain an efficient transmission and that, consequently, there may even be an interruption of the service (or of part of the service in the case of two or more transmission stations) provided by the satellite-television broadcasting system.

The aim of the present invention is hence to provide a system for monitoring and controlling a satellite-television broadcasting system that will be able to overcome, at least in part, the problems referred to above.

The aforesaid aim is achieved by the present invention in so far as it relates to a system for monitoring and controlling a satellite telecommunications system, according to what is defined in the annexed claims.

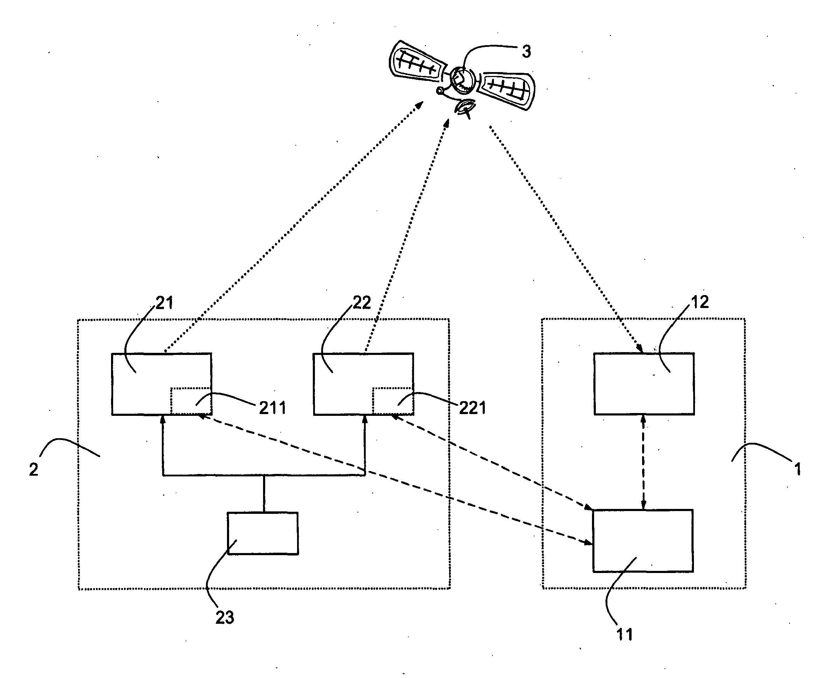

### BRIEF DESCRIPTION OF THE DRAWING

For a better understanding of the present invention some preferred embodiments will now be described, purely by way of non-limiting example, with reference to the attached figure (not in scale), which is a schematic illustration of a system for monitoring and controlling a satellite-television broadcasting system according to a preferred embodiment of the present invention.

### DETAILED DESCRIPTION OF THE PREFERRED EMBODIMENTS OF THE INVENTION

The ensuing description is provided to enable a person skilled in the sector to implement and use the invention. Various modifications to the embodiments presented will be immediately evident to persons skilled in the sector, and the generic principles disclosed herein could be applied to other embodiments and applications, without thereby departing from the sphere of protection of the present invention.

Consequently, the present invention must not be understood as being in any way limited only to the embodiments described and illustrated, but it must be granted the widest sphere of protection consistently with the principles and characteristics presented herein and defined in the annexed claims.

The present invention regards a system configured for:
- monitoring and controlling operation of a satellite telecommunications system, preferably of a satellite-television broadcasting system, and of a service provided thereby;
- detecting any possible malfunctioning of said satellite telecommunications system and/or of said service; and
- intervening, in the event of malfunctioning, on said satellite telecommunications system for restoring proper operation of said satellite telecommunications system and/or of said service.

In particular, the attached figure shows a block diagram representing a system 1 for monitoring and controlling a satellite-television broadcasting system 2 according to a preferred embodiment of the present invention.

In detail, as shown in the attached figure, said system 1 comprises monitoring and controlling means 11 and service-quality measuring means 12, whilst said satellite-television broadcasting system 2 comprises a first transmission station and a second transmission station, designated in the attached figure by 21 and 22, respectively.

The transmission stations 21 and 22 are located in respective positions on the surface of the Earth, are supplied by a single source 23 with the same digital-television signals, preferably compliant with the DVB-S standard and/or DVB-S2 standard, and comprise respective monitoring and controlling systems, designated in the attached figure by 211 and 221, respectively.

In addition, the transmission stations 21 and 22, in order to transmit to a satellite 3 respective portions of said digital-television signals, transmit, by means of respective satellite antennas (not shown in the attached figure), respective carriers that carry said respective portions of said digital-television signals.

Conveniently, the transmission stations 21 and 22 comprise redundant transmission chains in which the presence of switching devices enables, in the event of malfunctioning of an apparatus, use of a respective backup apparatus.

Consequently, the satellite 3 broadcasts the carriers received from the transmission stations 21 and 22 over an area of the surface of the Earth where the service-quality measuring means 12 are located.

In addition, once again with reference to the attached figure, the monitoring and controlling means 11 are connected to the monitoring and controlling systems 211 and 221 and to the service-quality measuring means 12, preferably by means of a communications network based upon the Internet Protocol (IP).

In general, in the event of malfunctioning of the satellite-television broadcasting system 2 and/or of the service provided thereby, the monitoring and controlling means 11 transfer one or more carriers transmitted by the first transmission station 21 to the second transmission station 22 and/or vice versa; i.e., they carry out a geographical switching of the transmission of one or more carriers between the transmission stations 21 and 22.

In particular, the monitoring and controlling means 11, through said communications network, receive, from the monitoring and controlling systems 211 and 221, respective data regarding respective conditions of operation of the transmission stations 21 and 22 and, from the service-quality measuring means 12, data regarding the quality of the service provided by the satellite-television broadcasting system 2. On the basis of the data received from the monitoring and controlling systems 211 and 221 and from the service-quality measuring means 12, the monitoring and controlling means 11 detect any possible malfunctioning of the satellite-television broadcasting system 2 and/or of the service provided thereby.

In detail, the transmission stations 21 and 22 comprise respective beacon receivers (not shown in the attached figure), which receive a beacon signal from the satellite 3.

As is known, a beacon signal is a non-modulated signal transmitted by a satellite at a fixed pre-defined frequency, referred to as "beacon frequency", and has the purpose of enabling alignment between the satellite antennas on the Earth and the satellite and for evaluating the power attenuation undergone by the signals transmitted in downlink on account of the weather conditions. Many of the satellites currently in orbit transmit different beacon signals at respective beacon frequencies.

Consequently, the beacon receivers of the transmission stations 21 and 22 receive from the satellite 3 beacon signals at one or more beacon frequencies. On the basis of the beacon signals received, in particular on the basis of the powers of said beacon signals received, the monitoring and controlling systems 211 and 221 determine, i.e., calculate, beacon-level values indicating the power attenuations undergone by the signals transmitted in downlink on account of the weather conditions encountered during propagation.

Assuming that the principle of reciprocity of the radio channels in downlink and uplink is valid, if a signal undergoes a given power attenuation when it travels between the satellite 3 and the transmission station 21 or 22, i.e., in downlink, it is possible to assume that a signal that travels between the transmission station 21 or 22 and the satellite 3, i.e., in uplink, undergoes a power attenuation proportional to the one undergone in downlink.

Consequently, the beacon-level values determined by the monitoring and controlling systems 211 and 221 are assumed as indicating the power attenuations undergone by the carriers transmitted by the transmission stations 21 and 22 to the satellite 3 on account of the weather conditions encountered during propagation.

In addition, the monitoring and controlling systems 211 and 221 determine, i.e., calculate, also respective effective-irradiated-isotropic-power (EIRP) values.

In particular, the monitoring and controlling systems 211 and 221 determine said respective EIRP values on the basis of the respective powers with which the transmission stations 21 and 22 transmit the respective carriers, said respective transmission powers being obtained by using respective high-power amplifiers (HPAs) (not shown in the attached figure) coupled to the respective satellite antennas.

In detail, the monitoring and controlling systems 211 and 221 determine, for each of the carriers transmitted by the transmission stations 21 and 22, a respective EIRP value. Hence, preferably the monitoring and controlling means 11 receive from the monitoring and controlling systems 211 and 221 the respective beacon-level values and the respective EIRP values determined.

Conveniently, the beacon-level values and the EIRP values received from the transmission stations 21 and 22 are associated to other information that has the purpose of validating them, such as, for example, connection alarms and positions of the switching devices for determination of the transmission chains on line in the transmission stations 21 and 22.

Once the validity of the beacon-level values and of the EIRP values received has been determined, the monitoring and controlling means 11 apply to the beacon-level values and to the EIRP values received and validated respective pre-set thresholds for establishing whether the beacon-level values and the EIRP values received and validated indicate a situation of alarm.

In particular, the monitoring and controlling means 11 compare the beacon-level values received and validated with a respective pre-set beacon threshold and, if the comparison reveals a situation of alarm, generate a beacon alarm. In the same way, the monitoring and controlling means 11 compare the EIRP values received and validated with respective pre-set EIRP thresholds and, if the comparison of one or more EIRP values with the respective pre-set EIRP thresholds reveals a situation of alarm, generate an EIRP alarm for the respective carriers.

In addition, the service-quality measuring means 12 receive, by means of a satellite antenna (not shown in the attached figure), the carriers broadcast by the satellite 3 and determine values indicating the quality of the service provided by the satellite-television broadcasting system 2; in particular, they determine values indicating the quality of the carriers received.

Preferably, the service-quality measuring means 12 determine, i.e., calculate, for each of the carriers received, a respective bit-error-rate (BER) value. If a BER value determined is lower than a respective pre-set quality threshold, the service-quality measuring means 12 reveal a situation of alarm for the respective carrier and supply, through said communications network, a respective BER alarm to the monitoring and controlling means 11.

Conveniently, the service-quality measuring means 12 supply to the monitoring and controlling means 11 also parameters for determining the validity of the measurements.

The validation of the beacon-level values, of the EIRP values, and of the BER measurements, based upon the signals that are to be validated sent by the monitoring and controlling systems 211 and 221 and by the service-quality measuring means 12 to the monitoring and controlling means 11 and by the apparatuses of the transmission chains of the transmission stations 21 and 22 to the monitoring and controlling systems 211 and 221, ensures that the decisions made by the monitoring and controlling means 11 are based upon valid data.

In the case of loss of communication, the processes of geographical switching can conveniently be blocked up to restoration of the communication.

Given the peculiarity of the hardware logics of switching of the apparatuses on the individual transmission chain, the fact of supplying the information on which apparatus is on line for said transmission chain enables the monitoring and controlling means 11 to store the positions of the switching devices. The stored positions of the switching devices can hence be conveniently used in the event of loss of communication towards the hardware switching logic. In this way, intervention of the monitoring and controlling means 11 is insured even in the case of failure of the hardware chain-switching logic, a situation that proves to be of higher risk for guarantee of the service.

To return to the description of the operation of the monitoring and controlling means 11, in the case where a BER alarm for a given carrier and an EIRP alarm for said given carrier are simultaneously present, or else in the case where a BER alarm for a given carrier and a beacon alarm are simultaneously present, the monitoring and controlling means 11 inhibit transmission of said given carrier to the transmission station 21 or 22 that is currently transmitting it and activate the transmission of said given carrier by the other transmission station 22 or 21.

In particular, for a BER and beacon or else a BER and EIRP double alarm for a given carrier, the monitoring and controlling means 11 execute the commands for removal of the given carrier from the transmission station 21 or 22 currently transmitting via the respective monitoring and controlling system 211 or 221, wait for confirmation of removal having occurred by said monitoring and controlling system 211 or 221, and execute the commands for activation of the given carrier on the other transmission station 22 or 21 via the respective monitoring and controlling system 221 or 211, awaiting confirmation of activation.

Preferably, the monitoring and controlling means 11, before carrying out a geographical switching of the transmission of a given carrier from one transmission station to the other, validate temporally each of the three BER, EIRP, and beacon alarms.

In particular, each of the three BER, EIRP, and beacon alarms must last a minimum time before being validated. In this way, extemporaneous geographical switchings and geographical switchings that are not actually necessary are prevented since an intervention of a hardware switching logic on the malfunctioning transmission chain would solve any contingent malfunctioning without any need for a geographical switching.

Conveniently, on the monitoring and controlling means 11 there may be set, for each individual carrier, one of the following states:
- a "SURVEY" state, in which the monitoring and controlling means 11 are active for the carrier;
- a "MANUAL" state, in which the monitoring and controlling means 11 are not active for the carrier but it is possible to perform the geographical switching via a command of an operator of the monitoring and controlling means 11; and
- a "MAINTENANCE" state, in which the monitoring and controlling means 11 are not active for the carrier and it is not possible to operate on the monitoring and controlling means 11.

Hence, when an operator of the monitoring and controlling means 11 sets the "SURVEY" state for one carrier, on the monitoring and controlling means 11 for the carrier a "STARTUP" state is initially set, and, if all the information necessary is validated, the "SURVEY" state is then set.

During a geographical switching of a carrier, the carrier on the monitoring and controlling means 11 assumes a whole series of values that describe the geographical-switching process, in particular removal of enabling of transmission by the transmission station 21 or 22 originally deputed to transmit the carrier, verification that the removal of enabling has taken place, enabling of transmission of the carrier on the other transmission station 22 or 21, and verification that enabling has taken place.

At the end of the geographical switching, the monitoring and controlling means 11 send the state of the carrier into the "MANUAL" state.

Re-setting of the "SURVEY" state can be conveniently executed by the operator of the monitoring and controlling means 11 so as to prevent any possible repeated geographical switchings between the transmission stations 21 and 22.

In addition, the monitoring and controlling means 11 manage also a "Deputed" information, i.e., the information as to which transmission station is assigned the task, in a normal situation, of transmitting the carrier.

This information has the purpose of highlighting to the operator whether the situation presented by the monitoring and controlling means 11 is normal or whether we are in a situation in which the monitoring and controlling means 11 have intervened.

Following upon a geographical switching of a carrier, the transmission of the carrier can be restored, once the situation of alarm has terminated, again on the transmission station originally deputed to its transmission by means of a manual geographical switching on the part of the operator, or else the transmission station that currently transmits the carrier can be promoted to "Deputed".

In order to point out to the operator the state of the monitoring and controlling means 11 further information can be used designed to indicate whether the chain is:
- "on line with the Deputed information";
- "saved on the transmission non-Deputed station";
- "ready to accept switching from the Deputed transmission station "; or
- "not ready to accept switching from the Deputed transmission station ".

Conveniently, the monitoring and controlling systems 211 and 221 may be redundant, i.e., they may comprise a master server and a slave server, which can stand in for the master server in the event of malfunctioning or failure of the latter. The monitoring and controlling means 11 hence store the IP addresses of both of the servers and automatically connect up to the first of the two servers available and try to connect again, in the event of loss of connection, with the first server available.

In addition, also the monitoring and controlling means 11 may be conveniently redundant, i.e., they may conveniently comprise a master server and a slave server with activation of the software on the slave server in the event of malfunctioning or failure of the master server.

Also the service-quality measuring means 12 may be conveniently redundant, i.e., they may conveniently comprise a master server and a slave server; which can stand in for the master server in the event of malfunctioning or failure of the latter. The monitoring and controlling means 11, also in this case, store the IP addresses of both of the servers and automatically connect up to the first of the two servers available and try to connect again, in the event of loss of connection, to the first one available.

In addition, the monitoring and controlling means 11 store the information as to which server of the monitoring and controlling systems 211 and 221 and as to which server of the service-quality measuring means 12 is supplying the information.

On the other hand, the monitoring and controlling means 11, in addition to filing all the events received, all the state changes, and all the actions undertaken; also store a historic file for each event.

In particular, when on the monitoring and controlling means 11 there is the first alarm for a chain in the "SURVEY" state, the state of the chain passes to "WARNED", and this activates start of the event that generates a historic file, identified with the carrier name, date and time, which contains all the information on the carrier until it returns to the "SURVEY" state when the alarm ceases or it goes into the "MANUAL" state if geographical switching has occurred. In this way, it is particularly simple to verify the events corresponding to a specific geographical switching.

From the foregoing description the advantages may be readily understood.

In particular, it should be emphasized how the system according to the present invention enables solution of the problems caused by particularly adverse weather conditions and/or by failure or malfunctioning of apparatuses of the transmission chains that are not equipped with respective automatic-enabling backup apparatuses and/or by simultaneous failure or malfunctioning both of apparatuses of the transmission chains and of the respective backup apparatuses and/or by simultaneous failure or malfunctioning both of apparatuses of the transmission chains and of the switching devices designed to enable operation of the respective backup apparatuses.

Another advantage of the present invention derives from the fact that it prevents interruption of the services provided by satellite telecommunications systems or, at least, reduces the time of interruption of said services.

Finally, it is clear that various modifications may be made to the present invention, all of which fall within the sphere of protection of the invention as defined in the annexed claims.

## Claims

1. A monitoring and controlling system (1) designed to monitor and control a satellite telecommunications system (2), wherein
• said satellite telecommunications system (2) comprises a plurality of transmission stations (21,22) for transmitting to a satellite (3) carriers that carry a service;
• the satellite (3) is configured to
- broadcast over a given area of the Earth's surface the carriers received from the transmission stations (21,22), and
- transmit beacon signals; and
• each transmission station (21,22) is operable to transmit respective carriers to the satellite (3), and is configured to
- receive the beacon signals transmitted by the satellite (3),
- determine, on the basis of the received beacon signals, beacon-level values indicative of power attenuations undergone by the respective transmitted carriers on account of weather conditions encountered during propagation from said transmission station (21,22) to the satellite (3), and
- determine EIRP values for the respective transmitted carriers on the basis of transmission powers used by said transmission station (21,22);
the monitoring and controlling system (1) comprising:
• service-quality measuring means (12) located in said given area of the Earth's surface and configured to
- receive the carriers broadcasted by the satellite (3),
- determine quality indicators for the received carriers, and
- generate a quality alarm for a received carrier if a corresponding quality indicator determined for said received carrier satisfies a first pre-defined condition with respect to a pre-set quality threshold; and
• monitoring and controlling means (11) coupled with the transmission stations (21,22) and with the service-quality measuring means (12) to receive, respectively, the beacon-level values and the EIRP values determined by said transmission stations (21,22), and the quality alarms generated by said service-quality measuring means (12); said monitoring and controlling means (11) being configured to
- detect a malfunction of the satellite telecommunications system (2) and/or the service with respect to a given carrier on the basis of the received quality alarms, the received beacon-level values and the received EIRP values, and,
- if a malfunction with respect to a given carrier is detected, inhibit the transmission station (21,22) that is currently transmitting said given carrier from transmitting further said given carrier and activate transmission of said given carrier by a different transmission station (21,22).

2. The monitoring and controlling system of claim 1, wherein the satellite telecommunications system (2) is a satellite television broadcasting system in which the transmission stations (21,22) are supplied by a single source (23) with same digital television signals; and wherein each transmission station (21,22) is operable to transmit respective carriers carrying respective portions of said digital-television signals.

3. The monitoring and controlling system according to claim 1 or 2, wherein the quality indicators determined by the service-quality measuring means (12) are BER values.

4. The monitoring and controlling system according to any preceding claim, wherein the monitoring and controlling means (11) are further configured to generate a beacon alarm if a received beacon-level value satisfies a second pre-defined condition with respect to a pre-set beacon threshold.

5. The monitoring and controlling system according to any claim 1-3, wherein the monitoring and controlling means (11) are further configured to:
• receive from the transmission stations (21,22) first validation data to be used to validate the beacon-level values determined by said transmission stations (21,22);
• validate the received beacon-level values on the basis of the received first validation data; and
• generate a beacon alarm if a validated beacon-level value satisfies a second pre-defined condition with respect to a pre-set beacon threshold.

6. The monitoring and controlling system according to claim 4 or 5, wherein the monitoring and controlling means (11) are further configured to detect a malfunction of the satellite telecommunications system (2) and/or the service with respect to a given carrier if both a quality alarm for said given carrier and a beacon alarm are present.

7. The monitoring and controlling system according to claim 4 or 5, wherein the monitoring and controlling means (11) are further configured to detect a malfunction of the satellite telecommunications system (2) and/or the service with respect to a given carrier if both a quality alarm for said given carrier and a beacon alarm remain for a pre-set minimum time.

8. The monitoring and controlling system according to any preceding claim, wherein the monitoring and controlling means (11) are further configured to generate an EIRP alarm for a carrier if a corresponding received EIRP value determined for said carrier satisfies a third pre-defined condition with respect to a pre-set EIRP threshold.

9. The monitoring and controlling system according to any claim 1-7, wherein the monitoring and controlling means (11) are further configured to:
• receive from the transmission stations (21,22) second validation data to be used to validate the EIRP values determined by said transmission stations (21,22);
• validate the received EIRP values on the basis of the received second validation data; and
• generate an EIRP alarm for a carrier if a corresponding validated EIRP value determined for said carrier satisfies a third pre-defined condition with respect to a pre-set EIRP threshold.

10. The monitoring and controlling system according to claim 8 or 9, wherein the monitoring and controlling means (11) are further configured to detect a malfunction of the satellite telecommunications system (2) and/or the service with respect to a given carrier if both an EIRP alarm for said given carrier and a quality alarm for said given carrier are present.

11. The monitoring and controlling system according to claim 8 or 9, wherein the monitoring and controlling means (11) are further configured to detect a malfunction of the satellite telecommunications system (2) and/or the service with respect to a given carrier if both an EIRP alarm for said given carrier and a quality alarm for said given carrier remain for a pre-set minimum time.

## Patentansprüche

1. Überwachungs- und Steuerungssystem (1), das konzipiert ist, um ein Satellitentelekommunikationssystem (2) zu überwachen und zu steuern, wobei
• das Satellitentelekommunikationssystem (2) mehrere Sendestationen (21, 22) zum Senden von Trägern, die einen Dienst befördern, an einen Satelliten (3) aufweisen;
• wobei der Satellit konfiguriert ist, um:
- über einen gegebenen Bereich der Erdoberfläche die von den Sendestationen (21, 22) empfangenen Träger rundzusenden, und
- Beacon-Signale zu senden; und
• wobei jede Sendestation (21, 22) betreibbar ist, um jeweilige Träger an den Satelliten (3) zu senden, und konfiguriert ist, um:
- die von dem Satelliten empfangenen Beacon-Signale zu empfangen,
- auf der Basis der empfangenen Beacon-Signale Beacon-Pegelwerte zu bestimmen, die Leistungsdämpfungen anzeigen, welche die jeweiligen gesendeten Träger aufgrund von Wetterbedingungen, auf die sie während der Ausbreitung von der Sendestation (21, 22) zu dem Satelliten (3) treffen, erfahren haben, und
- auf der Basis der von der Sendestation (21, 22) verwendeten Sendeleistungen EIRP-Werte für die jeweiligen gesendeten Träger zu bestimmen;
wobei das Überwachungs- und Steuerungssystem (1) aufweist:
• Dienstqualitätsmesseinrichtungen (12), die in dem gegebenen Bereich der Erdoberfläche angeordnet sind und konfiguriert sind, um
- die von dem Satelliten rundgesendeten Träger zu empfangen,
- Qualitätsindikatoren für die empfangenen Träger zu bestimmen, und
- eine Qualitätswarnung für einen empfangenen Träger zu erzeugen, wenn ein für den empfangenen Träger bestimmter entsprechender Qualitätsindikator eine erste vordefinierte Bedingung in Bezug auf eine vorher festgelegte Qualitätsschwelle erfüllt; und
• Überwachungs- und Steuerungseinrichtungen (11), die mit den Sendestationen (21, 22) und mit den Dienstqualitätsmesseinrichtungen (12) verbunden sind, um jeweils die Beacon-Pegelwerte und die EIRP-Werte, die von den Sendestationen (21, 22) bestimmt werden, und die Qualitätswarnungen, die von den Dienstqualitätsmesseinrichtungen (12) erzeugt werden, zu empfangen; wobei die Überwachungs- und Steuerungseinrichtungen (11) konfiguriert sind, um:
- eine Fehlfunktion des Satellitentelekommunikationssystems (2) und/oder des Dienstes in Bezug auf einen gegebenen Träger auf der Basis der empfangenen Qualitätswarnungen, der empfangenen Beacon-Pegelwerte und der empfangenen EIRP-Werte zu erfassen, und
- wenn eine Fehlfunktion in Bezug auf einen gegebenen Träger erfasst wird, zu unterbinden, dass die Sendestation (21, 22), die den gegebenen Träger gerade sendet, diesen gegebenen Träger weiter sendet, und die Sendung des gegebenen Trägers durch eine andere Sendestation (21, 22) zu aktivieren.

2. Überwachungs- und Steuerungssystem nach Anspruch 1, wobei das Satellitentelekommunikationssystem (2) ein Satellitenfernsehausstrahlungssystem ist, in dem die Sendestationen (21, 22) von einer einzelnen Quelle (23) mit den gleichen digitalen Fernsehsignalen versorgt werden; und wobei jede der Sendestationen (21, 22) betriebsfähig ist, um jeweilige Träger, die Teile der digitalen Fernsehsignale befördern, zu senden.

3. Überwachungs- und Steuerungssystem nach Anspruch 1 oder 2, wobei die von den Dienstqualitätsmesseinrichtungen (12) bestimmten Qualitätsindikatoren BER-Werte sind.

4. Überwachungs- und Steuerungssystem nach jedem vorhergehenden Anspruch, wobei die Überwachungs- und Steuerungseinrichtungen (11) ferner konfiguriert sind, um eine Beacon-Warnung zu erzeugen, wenn ein empfangener Beacon-Pegelwert eine zweite vordefinierte Bedingung in Bezug auf eine vorher festgelegte Beacon-Schwelle erfüllt.

5. Überwachungs- und Steuerungssystem nach einem der Ansprüche 1-3, wobei die Überwachungs- und Steuerungseinrichtungen (11) ferner konfiguriert sind, um:
• von den Sendestationen (21, 22) erste Prüfdaten zu empfangen, die verwendet werden sollen, um die Beacon-Pegelwerte zu prüfen, die von den Sendestationen (21, 22) bestimmt werden;
• die empfangenen Beacon-Pegelwerte auf der Basis der empfangenen ersten Prüfdaten zu prüfen; und
• eine Beacon-Warnung zu erzeugen, wenn ein geprüfter Beacon-Pegelwert eine zweite vordefinierte Bedingung in Bezug auf die vordefinierte Beacon-Schwelle erfüllt.

6. Überwachungs- und Steuerungssystem nach Anspruch 4 oder 5, wobei die Überwachungs- und Steuerungseinrichtungen (11) ferner konfiguriert sind, um eine Fehlfunktion des Satellitentelekommunikationssystems (2) und/oder des Dienstes in Bezug auf einen gegebenen Träger zu erfassen, wenn sowohl eine Qualitätswarnung für den gegebenen Träger als auch eine Beacon-Warnung vorhanden sind.

7. Überwachungs- und Steuerungssystem nach Anspruch 4 oder 5, wobei die Überwachungs- und Steuerungseinrichtungen (11) ferner konfiguriert sind, um eine Fehlfunktion des Satellitentelekommunikationssystems (2) und/oder des Dienstes in Bezug auf einen gegebenen Träger zu erfassen, wenn sowohl eine Qualitätswarnung für den gegebenen Träger als auch eine Beacon-Warnung eine vorher festgelegte minimale Zeit lang bleiben.

8. Überwachungs- und Steuerungssystem nach jedem vorhergehenden Anspruch, wobei die Überwachungs- und Steuerungseinrichtungen (11) ferner konfiguriert sind, um eine EIRP-Warnung für einen Träger zu erzeugen, wenn ein für den Träger bestimmter entsprechender empfangener EIRP-Wert eine dritte vordefinierte Bedingung in Bezug auf eine vorher festgelegte EIRP-Schwelle erfüllt.

9. Überwachungs- und Steuerungssystem nach jedem Anspruch 1-7, wobei die Überwachungs- und Steuerungseinrichtungen (11) ferner konfiguriert sind, um:
• von den Sendestationen (21, 22) zweite Prüfdaten zu empfangen, die verwendet werden sollen, um die von den Sendestationen (21, 22) bestimmten EIRP-Werte zu prüfen;
• die empfangenen EIRP-Werte auf der Basis der empfangenen zweiten Prüfdaten zu prüfen; und
• eine EIRP-Warnung für einen Träger zu erzeugen, wenn ein für diesen Träger bestimmter entsprechender geprüfter EIRP-Wert eine dritte vordefinierte Bedingung in Bezug auf eine vorher festgelegte EIRP-Schwelle erfüllt.

10. Überwachungs- und Steuerungssystem nach Anspruch 8 oder 9, wobei die Überwachungs- und Steuerungseinrichtungen (11) ferner konfiguriert sind, um eine Fehlfunktion des Satellitentelekommunikationssystems (2) und/oder des Dienstes in Bezug auf einen gegebenen Träger zu erfassen, wenn sowohl eine EIRP-Warnung für den gegebenen Träger als auch eine Qualitätswarnung für den gegebenen Träger vorhanden sind.

11. Überwachungs- und Steuerungssystem nach Anspruch 8 oder 9, wobei die Überwachungs- und Steuerungseinrichtungen (11) ferner konfiguriert sind, um eine Fehlfunktion des Satellitentelekommunikationssystems (2) und/oder des Dienstes in Bezug auf einen gegebenen Träger zu erfassen, wenn sowohl eine EIRP-Warnung für den gegebenen Träger als auch eine Qualitätswarnung für den gegebenen Träger eine vorher festgelegte Mindestzeit lang bleiben.

## Revendications

1. Système de surveillance et de commande (1) conçu pour surveiller et commander un système de télécommunications par satellite (2), dans lequel
- ledit système de télécommunications par satellite (2) comprend une pluralité de stations de transmission (21, 22) pour transmettre à un satellite (3) des porteuses qui acheminent un service ;
- le satellite (3) est configuré pour
- diffuser sur une zone donnée de la surface de la Terre les porteuses reçues des stations de transmission (21, 22), et
- transmettre des signaux de balise ; et
- chaque station de transmission (21, 22) est exploitable pour transmettre des porteuses respectives au satellite (3), et est configurée pour
- recevoir les signaux de balise transmis par le satellite (3),
- déterminer, sur la base des signaux de balise reçus, des valeurs de niveau de balise indiquant des affaiblissements en puissance subis par les porteuses transmises respectives à cause de conditions météorologiques rencontrées pendant la propagation de ladite station de transmission (21, 22) au satellite (3), et
- déterminer des valeurs EIRP pour les porteuses transmises respectives sur la base de puissances de transmission utilisées par ladite station de transmission (21, 22) ;
le système de surveillance et de commande (1) comprenant :
- des moyens de mesure de qualité de service (12) situés dans ladite zone donnée de la surface de la Terre et configurés pour
- recevoir les porteuses diffusées par le satellite (3),
- déterminer des indicateurs de qualité pour les porteuses reçues, et
- générer une alarme de qualité pour une porteuse reçue si un indicateur de qualité correspondant déterminé pour ladite porteuse reçue satisfait à une première condition prédéfinie par rapport à un seuil de qualité préétabli ; et
- des moyens de surveillance et de commande (11) couplés avec les stations de transmission (21, 22) et avec les moyens de mesure de qualité de service (12) pour recevoir, respectivement, les valeurs de niveau de balise et les valeurs EIRP déterminées par lesdites stations de transmission (21, 22), et les alarmes de qualité générées par lesdits moyens de mesure de qualité de service (12) ; lesdits moyens de surveillance et de commande (11) étant configurés pour
- détecter un mauvais fonctionnement du système de télécommunications par satellite (2) et/ou du service par rapport à une porteuse donnée sur la base des alarmes de qualité reçues, des valeurs de niveau de balise reçues et des valeurs EIRP reçues, et,
- si un mauvais fonctionnement par rapport à une porteuse donnée est détecté, empêcher la station de transmission (21, 22) qui transmet actuellement ladite porteuse donnée de poursuivre la transmission de ladite porteuse donnée et activer la transmission de ladite porteuse donnée par une station de transmission différente (21, 22).

2. Système de surveillance et de commande selon la revendication 1, dans lequel le système de télécommunications par satellite (2) est un système de radiodiffusion de télévision par satellite dans lequel les stations de transmission (21, 22) sont alimentées par une source unique (23) avec les mêmes signaux de télévision numérique ; et dans lequel chaque station de transmission (21, 22) est exploitable pour transmettre des porteuses respectives acheminant des parties respectives desdits signaux de télévision numérique.

3. Système de surveillance et de commande selon la revendication 1 ou 2, dans lequel les indicateurs de qualité déterminés par les moyens de mesure de qualité de service (12) sont des valeurs BER.

4. Système de surveillance et de commande selon l'une quelconque des revendications précédentes, dans lequel les moyens de surveillance et de commande (11) sont en outre configurés pour générer une alarme de balise si une valeur de niveau de balise reçue satisfait à une deuxième condition prédéfinie par rapport à un seuil de balise préétabli.

5. Système de surveillance et de commande selon l'une quelconque des revendications 1 à 3, dans lequel les moyens de surveillance et de commande (11) sont en outre configurés pour :
- recevoir des stations de transmission (21, 22) des premières données de validation à utiliser pour valider les valeurs de niveau de balise déterminées par lesdites stations de transmission (21, 22) ;
- valider les valeurs de niveau de balise reçues sur la base des premières données de validation reçues ; et
- générer une alarme de balise si une valeur de niveau de balise validée satisfait à une deuxième condition prédéfinie par rapport à un seuil de balise préétabli.

6. Système de surveillance et de commande selon la revendication 4 ou 5, dans lequel les moyens de surveillance et de commande (11) sont en outre configurés pour détecter un mauvais fonctionnement du système de télécommunications par satellite (2) et/ou du service par rapport à une porteuse donnée si à la fois une alarme de qualité pour ladite porteuse donnée et une alarme de balise sont présentes.

7. Système de surveillance et de commande selon la revendication 4 ou 5, dans lequel les moyens de surveillance et de commande (11) sont en outre configurés pour détecter un mauvais fonctionnement du système de télécommunications par satellite (2) et/ou du service par rapport à une porteuse donnée si à la fois une alarme de qualité pour ladite porteuse donnée et une alarme de balise restent pendant un temps minimum préétabli.

8. Système de surveillance et de commande selon l'une quelconque des revendications précédentes, dans lequel les moyens de surveillance et de commande (11) sont en outre configurés pour générer une alarme EIRP pour une porteuse si une valeur EIRP reçue correspondante déterminée pour ladite porteuse satisfait à une troisième condition prédéfinie par rapport à un seuil EIRP préétabli.

9. Système de surveillance et de commande selon l'une quelconque des revendications 1 à 7, dans lequel les moyens de surveillance et de commande (11) sont en outre configurés pour :
- recevoir des stations de transmission (21, 22) des secondes données de validation à utiliser pour valider les valeurs EIRP déterminées par lesdites stations de transmission (21, 22) ;
- valider les valeurs EIRP reçues sur la base des secondes données de validation reçues ; et
- générer une alarme EIRP pour une porteuse si une valeur EIRP validée correspondante déterminée pour ladite porteuse satisfait à une troisième condition prédéfinie par rapport à un seuil EIRP préétabli.

10. Système de surveillance et de commande selon la revendication 8 ou 9, dans lequel les moyens de surveillance et de commande (11) sont en outre configurés pour détecter un mauvais fonctionnement du système de télécommunications par satellite (2) et/ou du service par rapport à une porteuse donnée si à la fois une alarme EIRP pour ladite porteuse donnée et une alarme de qualité pour ladite porteuse donnée sont présentes.

11. Système de surveillance et de commande selon la revendication 8 ou 9, dans lequel les moyens de surveillance et de commande (11) sont en outre configurés pour détecter un mauvais fonctionnement du système de télécommunications par satellite (2) et/ou du service par rapport à une porteuse donnée si à la fois une alarme EIRP pour ladite porteuse donnée et une alarme de qualité pour ladite porteuse donnée restent pendant un temps minimum préétabli.
